# EUROPEAN PATENT APPLICATION

(11) **EP 1 980 979 A1**
(43) Date of publication of application: **15.10.2008**
(21) Application number: 07707513.3
(22) Date of filing: 26.01.2007
(51) Int. Cl.: G06Q 10/00, G09B 19/00

(54) **ADVICE APPARATUS, ADVICE METHOD, ADVICE PROGRAM AND COMPUTER READABLE RECORDING MEDIUM STORING THE ADVICE PROGRAM**

(30) Priority: 31.01.2006 JP 2006022305
(71) Applicant: Matsushita Electric Industrial Co., Ltd., Kadoma-shi Osaka 571-8501 (JP)
(72) Inventor: NODA, Makiko c/o Matsushita Electric Industrial Co Ltd Intellectual Property Rights Operations Company, Chuo-ku,Osaka-shi, Osaka 540-6207 (JP); NAGAMITSU, Sachio c/o Matsushita Electric Industrial Co Ltd Intellectual Property Rights Operations Company, Chuo-ku,Osaka-shi,Osaka 540-6207 (JP)
(74) Representative: Schwabe - Sandmair - Marx
(86) International application number: PCT/JP2007/051281
(87) International publication number: WO 2007/088791

(57) **Abstract**

The present invention provides advice suitable to the personality of a user.
An input unit 100 acquires a piece of previously sorted personality information of a user, a personality information database 101 stores effective persuasion items for each piece of personality information, an advice information database 102 stores a plurality of sentence elements for creating advice for assisting the operation of the user and pieces of composition information of sentence elements corresponding to the persuasion items, a persuasion item determination processing unit 103 determines a persuasion item effective to the personality information acquired by the input unit 100, an advice generation processing unit 104 generates the advice by connecting a plurality of sentence elements based on the composition information corresponding to a persuasion item determined by the persuasion item determination processing unit 103, and an output unit 107 outputs the advice generated by the advice generation processing unit 104.

## Description

### TECHNICAL FIELD

The present invention relates to an advice apparatus for providing advice for assisting an operation of a user by means of text, voice and the like, an advice method, an advice program and a computer readable recording medium storing the advice program.

### BACKGROUND ART

Some electrical house appliances and electrical equipment are provided with a voice guide function for providing operation guidance and some systems are interactive with a person. In such circumstances, as a method of determining contents of dialog and reaction to a user, there is known the following methods. That is, subsidiary words appended to a speech text and metrical parameter are determined based on the state of ego between a user and a system estimated based on metrical characteristics and contents of the sounds made by the user (see, for example, Japanese Unexamined Patent Publication No. 2004-310034).

Also, there is known a method such that the personality of the user is previously determined and the emotion of the user is estimated from rhythm of the sounds made by and keywords pronounced by the user, and then reply sentences are determined based on his/her personality and emotion (see, for example, Japanese Unexamined Patent Publication No. 2004-21121).

Presently, as a scale representing personality of a person, there is a Big Five factor model created based on a theory that personality can be described with Big Five factors (see, for example, "Big Five factor personality testing handbook-From basic measurement of personality to the world of Big Five factors"; Murakami Yoshihiro, Murakami Chieko, Gakugei Tosho, February 15, 2001). Also, a study of negotiation investigates how persons behave on negotiation (see, for example, "Bargaining power", Nakajima Yousuke, Kodansha, Gendai-shinsho).

However, in the speech content determination method according to Japanese Unexamined Patent Publication No. 2004-310034, a reaction method is determined based on the state of ego estimated from contents and characteristics of the sounds made by the user. However, there is a problem that an effective reply cannot be made in such cases where noises are generated, in addition to the sounds made by the user, during a cooking operation which prevents correct voice recognition; and that the user concentrates during an operation and makes no sounds. Further, the method is characterized in that the reaction method is determined based on subsidiary words and rhythmic parameters. However, to lead the user to follow advice, it is necessary to change the reaction contents to draw the user's interest.

In the reaction content determination method according to Japanese Unexamined Patent Publication No. 2004-21121, the reply content is determined based on personality and emotion. However, no constitution means of the reply content is not disclosed therein. As such, there is a problem that, when a large amount of various reply contents are created, it is difficult to verify whether or not the reply content matches the personality and emotion of the user.

### DISCLOSURE OF THE INVENTION

The invention has been proposed to solve the above problems. It is an object of the invention to provide an advice apparatus capable of providing appropriate advice in accordance with the personality of a user, an advice method, an advice program and a computer readable recording medium storing the advice program.

An advice apparatus according to an aspect of the invention includes: a personality information storage unit that stores a piece of effective persuasion information for each piece of previously sorted personality information; an advice information storage unit that stores a plurality of sentence elements for composing advice for assisting an operation of a user and pieces of composition information for the sentence elements corresponding to the pieces of persuasion information; an acquiring unit that acquires a piece of personality information of the user; a persuasion information decision unit that refers to the personality information storage unit and determines a piece of effective persuasion information for the personality information acquired by the acquiring unit; an advice information generating unit that refers to the advice information storage unit and generates the advice by connecting the plurality of sentence elements based on the composition information corresponding to the persuasion information decided by the persuasion information decision unit; and an output unit that outputs the advice generated by the advice information generating unit.

An advice method according to another aspect of the invention includes: an acquisition step for acquiring a piece of previously sorted personality information of a user; a persuasion information determination step for determining a piece of effective persuasion information for the personality information acquired by the acquiring step by referring to a personality information storage unit storing a piece of effective persuasion information for each of the pieces of the personality information; an advice generation step for generating advice by connecting the plurality of sentence elements based on the pieces of the composition information corresponding to the persuasion information determined by the persuasion information determination step by referring to an advice information storage unit storing the plurality of sentence elements for composing the advice for assisting operation of the user and pieces of composition information of the sentence elements corresponding to the persuasion information; and output step for outputting the advice generated in the advice generating step.

An advice program according to another aspect of the invention causes a computer to function as: a personality information storage unit that stores a piece of effective persuasion information effective for each piece of previously sorted personality information; an advice information storage unit that stores a plurality of sentence elements for composing advice for assisting an operation of a user and pieces of composition information for the sentence elements corresponding to the pieces of persuasion information; an acquiring unit that acquires a piece of personality information of the user; a persuasion information decision unit that refers to the personality information storage unit and determines a piece of effective persuasion information for the personality information acquired by the acquiring unit; an advice information generating unit that refers to the advice information storage unit and generates the advice by connecting the plural pieces of sentence elements based on the composition information corresponding to the persuasion information decided by the persuasion information decision unit; and an output unit that outputs the advice generated by the advice information generating unit.

A computer readable recording medium storing the advice program according to another aspect of the invention stores an advice program for causing a computer to function as: a personality information storage unit that stores a piece of effective persuasion information effective for each piece of previously sorted personality information; an advice information storage unit that stores a plurality of sentence elements for composing advice for assisting an operation of a user and pieces of composition information for the sentence elements corresponding to the pieces of persuasion information; an acquiring unit that acquires a piece of personality information of the user; a persuasion information decision unit that refers to the personality information storage unit and determines a piece of effective persuasion information for the personality information acquired by the acquiring unit; an advice information generating unit that refers to the advice information storage unit and generates the advice by connecting the plural pieces of sentence elements based on the composition information corresponding to the persuasion information decided by the persuasion information decision unit; and an output unit that outputs the advice generated by the advice information generating unit.

According to the above-described configuration, a piece of personality information of a user, which is previously sorted, is acquired first. And then, referring to a personality information storage unit that stores a piece of effective persuasion information for the each piece of the personality information, a piece of persuasion information that is effective to the acquired personality information is determined. And referring to the advice information storage unit that stores a plurality of sentence elements for composing advice for assisting the operation of the user and a plural pieces of composition information of sentence elements corresponding to the pieces of persuasion information, the plurality of sentence elements are connected to generate the advice based on a piece of composition information appropriate to the determined persuasion information, and the generated advice is output.

According to the invention, persuasion information which is effective to the personality of the user is determined, and an advice for assisting the operation of the user is generate based on the determined persuasion information, and thereby an appropriate advice corresponding to the personality of the user can be provided.

### BRIEF DESCRIPTION OF THE DRAWINGS

Fig. 1 is a block diagram illustrating a configuration of an advice apparatus according to a first embodiment of the invention.
Fig. 2 illustrates an example of a mapping table of a personality information database according to the first embodiment of the invention.
Fig. 3 illustrates an example of a personality table of the personality information database according to the first embodiment of the invention.
Fig. 4 illustrates an example of a persuasion item table of the personality information database according to the first embodiment of the invention.
Fig. 5 illustrates an example of a sentence pattern table of the advice information database according to the first embodiment of the invention.
Fig. 6 illustrates an example of a basic block table of the advice information database according to the first embodiment of the invention.
Fig. 7 illustrates an example of a connective table of the advice information database according to the first embodiment of the invention.
Fig. 8 illustrates an example of a subject table of the advice information database according to the first embodiment of the invention.
Fig. 9 illustrates an example of a recipe table of the advice information database according to the first embodiment of the invention.
Fig. 10 is a flowchart illustrating the operation of the advice apparatus according to the first embodiment of the invention.
Fig. 11 is a flowchart illustrating a flow of an advice sentence creating process in step S9 in Fig. 10.
Fig. 12 illustrates an experimental result with respect to the preference of users with respective personalities to the advice sentences of the respective persuasion items.
Fig. 13 illustrates an experimental result with respect to the preference of users with respective personalities to the advice sentences of the respective persuasion items under an emergent situation.
Fig. 14 is a block diagram illustrating a modification of the configuration of an advice apparatus according to the first embodiment.
Fig. 15 is a block diagram illustrating the configuration of an advice apparatus according to a second embodiment.
Fig. 16 is a first flowchart illustrating the operation of the advice apparatus according to the second embodiment.
Fig. 17 is a second flowchart illustrating the operation of the advice apparatus according to the second embodiment.

### BEST MODE FOR CARRYING OUT THE INVENTION

### (First Embodiment)

Hereinafter, an advice apparatus according to an embodiment of the invention will be described with reference to the accompanying drawings.

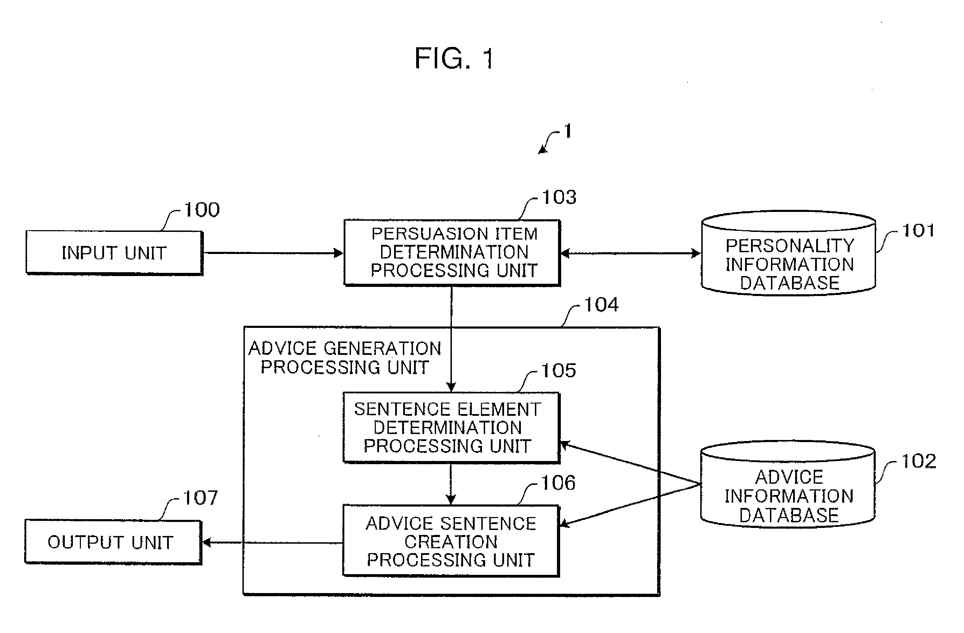

Fig. 1 is a block diagram illustrating a configuration of an advice apparatus according to a first embodiment. An advice apparatus 1 illustrated in Fig. 1 includes an input unit 100, a personality information database 101, an advice information database 102, a persuasion item determination processing unit 103, an advice generation processing unit 104, and an output unit 107.

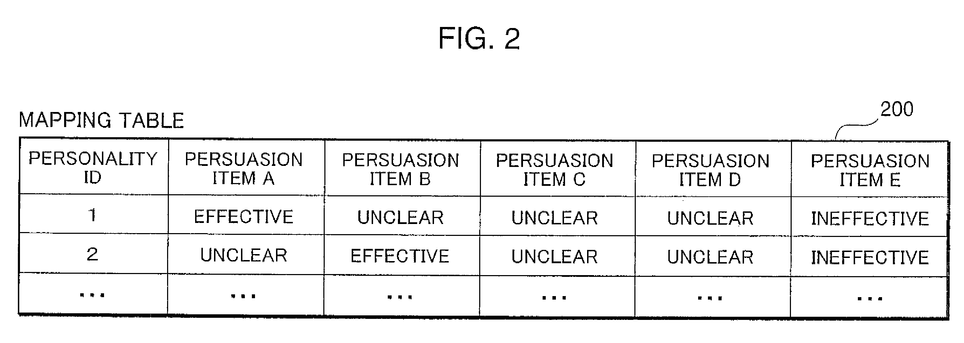

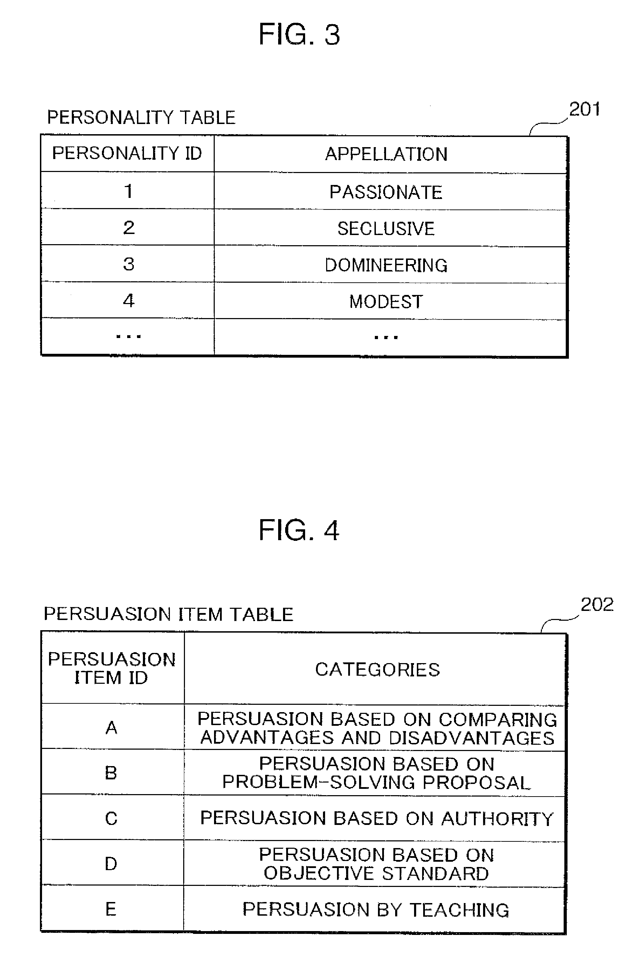

The input unit 100 receives a piece of personality information input by a user. The personality information database 101 holds a mapping table illustrated in Fig. 2 storing relations between pieces of personality information and persuasion items used for creating advice sentences, a personality table illustrated in Fig. 3 storing pieces of personality information, and a persuasion item table illustrated in Fig. 4 storing pieces of information of persuasion items. As for the personality information, a Big Five factor model, which represents a personality using five factors including "extroversion", "agreeableness", "conscientiousness", "neuroticism" and "openness to experience", is employed. The personality sorting in the first embodiment is described in "Big Five factor personality testing handbook-From basic measurement of personality to the world of Big Five factor" by Murakami Yoshihiro and Murakami Chieko, and thus a detailed description is omitted here. Used as the persuasion items are five persuasion items which are used in persuasions based on rational nature employed in a study of bargaining. As for the persuasion items in this embodiment, since descriptions are given in "bargaining power"; Nakajima Yousuke, a detailed description thereof is omitted here.

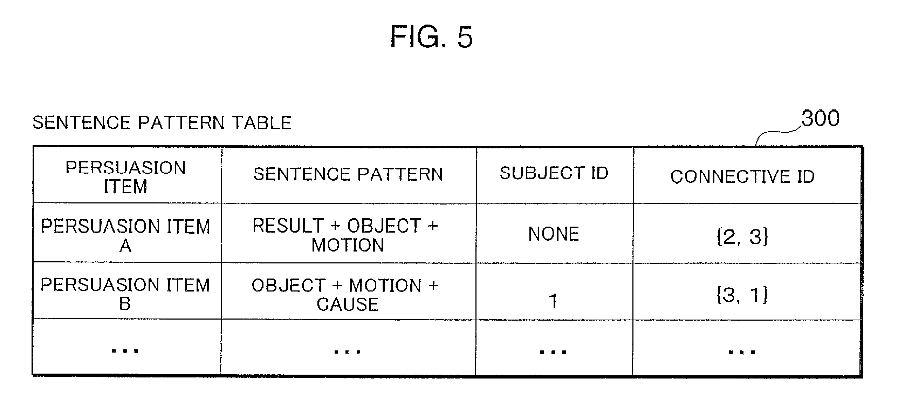

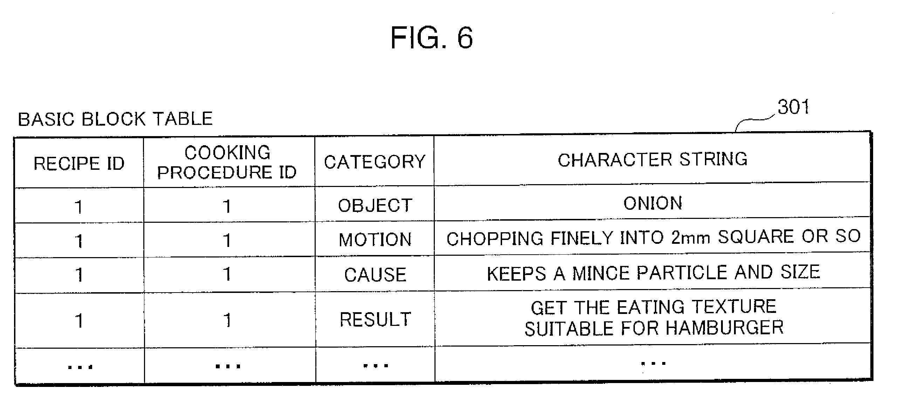

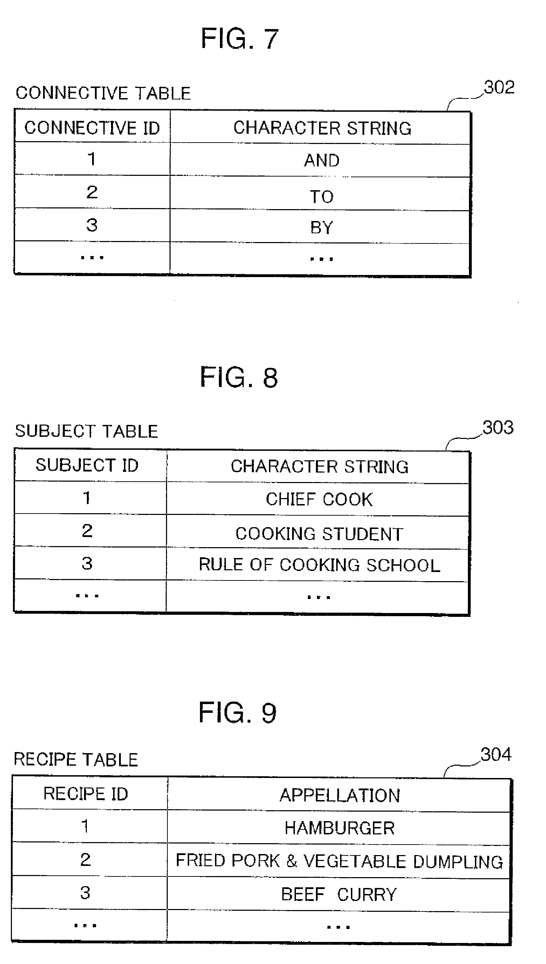

The advice information database 102 holds a sentence pattern table illustrated in Fig. 5 storing sentence patterns for creating advice based on persuasion items, a basic block table illustrated in Fig. 6 providing sentence pattern elements for advice, a connective table illustrated in Fig. 7, a subject table illustrated in Fig. 8, and a recipe table illustrated in Fig. 9. The persuasion item determination processing unit 103 determines a persuasion item to be used for creating advice.

The advice generation processing unit 104 generates advice to be given to the user based on a persuasion item determined by the persuasion item determination processing unit 103. The advice generation processing unit 104 includes a sentence element determination processing unit 105 and an advice sentence creation processing unit 106. The sentence element determination processing unit 105 determines sentence elements in accordance with a sentence pattern for creating an advice sentence based on the persuasion item. The advice sentence creation processing unit 106 acquires sentence elements determined by the sentence element determination processing unit 105 and combines the sentence elements to complete an advice sentence. The output unit 107 outputs the advice sentence generated by the advice generation processing unit 104.

Subsequently, configuration of the data necessary for the first embodiment will be described, referring to Figs. 2 to 9. Fig. 2 illustrates an example of a mapping table. A mapping table 200 illustrated in Fig. 2 stores effectiveness of the persuasion items for each of the personality IDs for identifying the personalities described on the basis of the Big Five factor model. That is, the mapping table 200 stores pieces of information in which each of the persuasion items is allotted to the respective suitable personality IDs, and each of the persuasion items is associated with the respective personality IDs being sorted into "effective", "ineffective" and "unclear".

Fig. 3 illustrates an example of the personality table. A personality table 201 illustrated in Fig. 3 stores the personality IDs for uniquely identifying the personalities associated with the appellations of the personalities. In the embodiment, the personalities are sorted into a total of 51 patterns. That is, a two-point code in which two factors, i.e., the upper two factors exhibiting a remarkable tendency in the Big Five factors, are represented with four combinations (high/low) (40 patterns); a one-point code represented with a single factor (high/low) (10 patterns), and a personality that has no remarkable tendency with respect to any factor (one pattern). As for the sorting method of the personalities, descriptions are given in "Big Five factor personality testing handbook-From basic measurement of personality to the world of Big Five factor" by Murakami Yoshihiro, Murakami Chieko, Gakugei Toshyo, February 15, 2001 listed above. For example, personality ID "1" is associated with an appellation of "passionate"; personality ID "2" is associated with an appellation of "seclusive"; personality ID "3" is associated with an appellation of "domineering"; and personality ID "4" is associated with an appellation of "modest".

Fig. 4 illustrates an example of the persuasion item table. A persuasion item table 202 illustrated in Fig. 4 stores persuasion item IDs for uniquely determining the persuasion items and are associated with categories of the respective persuasion item IDs. For example, persuasion item ID "A" is associated with "persuasion based on comparing advantages and disadvantages"; persuasion item ID "B" is associated with "persuasion based on problem-solving proposal"; persuasion item ID "C" is associated with "persuasion based on authority"; persuasion item ID "D" is associated with "persuasion based on an objective standard"; and persuasion item ID "E" is associated with "persuasion by teaching".

Fig. 5 illustrates an example of the sentence pattern table. A sentence pattern table 300 illustrated in Fig. 5 stores sentence patterns, subject IDs for identifying the subjects, and connective IDs for identifying the connectives for connecting the basic blocks for each persuasion item. Fig. 6 illustrates an example of the basic block table. A basic block table 301 illustrated in Fig. 6 stores recipe IDs for identifying the recipes in which the basic blocks as sentence elements of the advice are used; cooking procedure IDs for identifying the cooking procedures; categories of the basic blocks; and particular character strings of basic blocks.

Fig. 7 illustrates an example of a connective table. A connective table 302 illustrated in Fig. 7 stores character strings for connecting each of the basic blocks held in the basic block table 301 associated with the connective IDs for uniquely determining the character strings. Fig. 8 illustrates an example of a subject table. The subject table 303 illustrated in Fig. 8 stores character strings used as subjects of advice associated with subject IDs for uniquely determining the character strings. Fig. 9 illustrates an example of a recipe table. A recipe table 304 illustrated in Fig. 9 stores recipe IDs for uniquely determining the recipes associated with appellations of the recipes.

In the embodiment, the personality information database 101 is an example of a personality information storage unit; the advice information database 102 is an example of an advice information storage unit; the input unit 100 is an example of an acquiring unit; the persuasion item determination processing unit 103 is an example of a persuasion information decision unit; the advice generation processing unit 104 is an example of an advice information generating unit; and the output unit 107 is an example of an output unit.

Subsequently, a process flow in the advice apparatus will be described with reference to Fig. 1. First of all, the output unit 107 presents pieces of recipe information and personality information. Then, the input unit 100 receives a piece of recipe information and a piece of personality information input by the user, and acquires the recipe information and the personality information. Then, the persuasion item determination processing unit 103 acquires the personality information input through the input unit 100, refers to mapping data between the personality IDs and the persuasion items stored in the mapping table 200 of the personality information database 101, and determines a persuasion item effective to the input personality information. Then, from the advice information database 102, the sentence element determination processing unit 105 in the advice generation processing unit 104 acquires sentence elements for creating advice in accordance with the persuasion item determined by the persuasion item determination processing unit 103. Then, the advice sentence creation processing unit 106 creates an advice sentence by combining character strings of sentence elements determined by the sentence element determination processing unit 105. Then, the advice sentence creation processing unit 106 outputs the advice sentence to the output unit 107. The output unit 107 outputs the advice sentence created by the advice sentence creation processing unit 106.

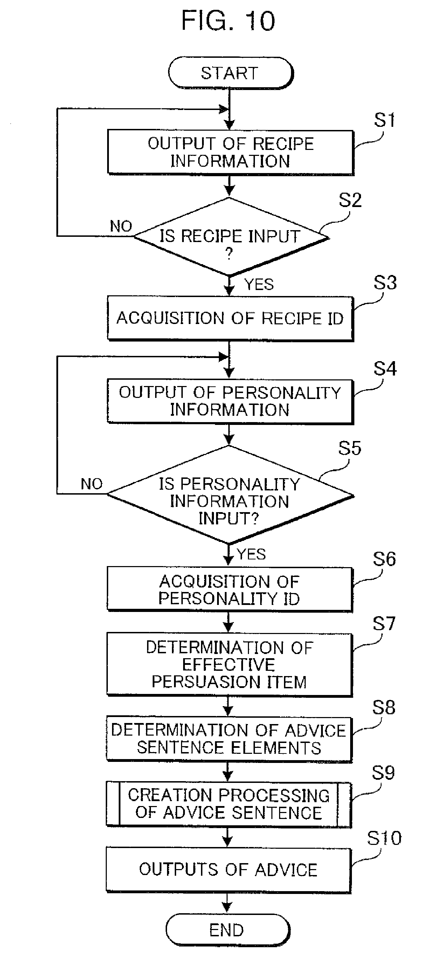

Subsequently, the operation of the advice apparatus will be described in accordance with a flowchart illustrated in Fig. 10. First of all, the output unit 107 displays appellations of the recipes (recipe information) stored in the recipe table 304 (step S1). The input unit 100 receives the recipe information input by the user. The user selects a recipe that the user wants to get advice thereof from a plurality of appellations of recipes displayed on the output unit 107. Then, the input unit 100 determines whether or not the recipe information is input by the user (step S2). When the recipe information is input by the user (YES in step S2), the persuasion item determination processing unit 103 refers to the recipe table 304 and acquires a recipe ID corresponding to the recipe appellation selected by the user (step S3). Contrarily, when no recipe information is input by the user (NO in step S2), the process returns to step S1 and waits for input. For example, when the user selects "hamburger" from the plurality of recipes output by the output unit 107, the persuasion item determination processing unit 103 acquires the recipe ID "1" from the recipe table 304.

According to the embodiment, a plurality of appellations of recipes are displayed on the output unit 107, a recipe for which the user would like advice for is selected from the displayed plurality of appellations of recipes, and the selection of the recipe is received by the input unit 100. However, the invention is not particularly limited to the above. The input unit 100 may be configured to directly receive an input of an appellation of a recipe.

Then, the output unit 107 displays personality appellations (personality information) stored in the personality table 201 (step S4). The input unit 100 receives the personality information input by the user. The user selects an appellation representing a personality of his/her own from a plurality of personality appellations displayed on the output unit 107. Then, the input unit 100 determines whether or not the user inputs the personality information (step S5). When the user inputs the personality information (YES in step S5), the persuasion item determination processing unit 103 refers to the personality table 201 and acquires a personality ID corresponding to the appellation of personality selected by the user (step S6). Contrarily, when no personality information is input by the user (NO in step S5), the process returns to step S4 and waits for input. For example, when the user selects "passionate" from the plurality of personality appellations output by the output unit 107, the persuasion item determination processing unit 103 acquires the personality ID "1" from the personality table 201.

In the embodiment, a plurality of personality appellations are displayed on the output unit 107 and the input unit 100 receives a selected personality which matches a personality of a user from a plurality of displayed personality appellations. However, the invention is not particularly limited to the above. The input unit 100 may be configured to directly receive an input of a personality appellation.

Also, the input unit 100 may be configured to perform a test for sorting a personality of a user and acquire a piece of personality information of the user based on the test result. In this case, the advice apparatus 1 stores user IDs for identifying users and the personality information of users while associating with each other. The advice apparatus 1 performs user authentication on start-up and acquires the personality information corresponding to the user ID.

Subsequently, the persuasion item determination processing unit 103 refers to the mapping table 200 and determines an effective persuasion item with respect to the acquired personality ID (step S7). For example, when the input personality is "passionate", the personality ID is "1" and thus the effective persuasion item is "A", as illustrated in Fig. 2.

The persuasion items employed in the embodiment are given as an example only. The embodiment is applicable to a persuasion based on irrational nature, and a like effect can be obtained.

Subsequently, the sentence element determination processing unit 105 refers to the sentence pattern table 300 and determines a sentence pattern, a subject ID, and connective IDs for creating advice in accordance with the effective persuasion item determined in step S7 (step S8). For example, when the effective persuasion item determined in step S7 is "persuasion item A", the sentence pattern of the advice in accordance with the persuasion item A is "result + object + motion"; the subject ID is "NONE"; and connective IDs are "2 and 3", as illustrated in Fig. 5.

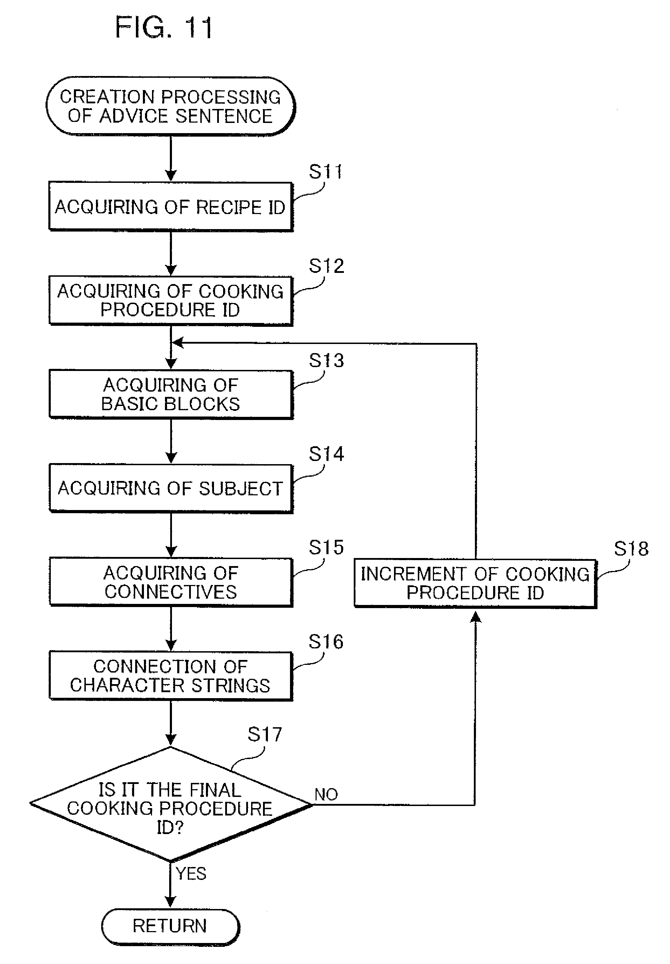

Subsequently, the advice sentence creation processing unit 106 acquires character strings as the sentence elements of the advice from a first operation ID of the recipe ID acquired in step S3 from the basic block table 301, the connective table 302, and the subject table 303 one by one in order, and connects the character strings in accordance with the sentence pattern determined in step S8 to create the advice sentence (step S9). As for the advice sentence creating process in step S9, a description will be given later with reference to Fig. 11. And the advice sentence creation processing unit 106 outputs the created advice sentence to the output unit 107. The output unit 107 outputs the advice sentence created by the advice sentence creation processing unit 106 (step S10).

Fig. 11 is a flowchart illustrating a flow of the advice sentence creating process in step S9 in Fig. 10. First of all, the advice sentence creation processing unit 106 acquires a recipe ID acquired in step S3 (step S11). Then, the advice sentence creation processing unit 106 refers to the basic block table 301 and acquires a cooking procedure ID registered at the top of the cooking procedure IDs in the recipe ID acquired in step S11 (step S12). For example, when the recipe ID acquired in step S11 is "1", the first cooking procedure ID is "1".

Subsequently, the advice sentence creation processing unit 106 acquires basic blocks relevant to the cooking procedure ID acquired in step S12 from the basic block table 301 in accordance with the sentence pattern of the sentence pattern determined in step S8 (step S13). For example, when the sentence pattern determined in step S8 is "result + object + motion", the advice sentence creation processing unit 106 acquires basic blocks of "get the eating texture suitable for hamburger", "onion", and "chop finely into 2 mm square or so" from the basic block table 301.

Subsequently, the advice sentence creation processing unit 106 acquires a subject corresponding to the subject ID of sentence pattern determined in step S8 from the subject table 303 (step S14). For example, when the subject ID determined in step S8 is "NONE", since no subject is used, the advice sentence creation processing unit 106 acquires no subject.

Subsequently, the advice sentence creation processing unit 106 acquires connectives corresponding to the connective ID of the sentence pattern determined in step S8 from the connective table 302 (step S15). For example, when the connective ID determined in step S8 is "2 and 3", the advice sentence creation processing unit 106 acquires connectives "to" and "by".

Subsequently, the advice sentence creation processing unit 106 combines character strings acquired in steps S13 to S15 by interposing the connectives between the basic blocks (step S16). For example, the advice sentence creation processing unit 106 combines "get the eating texture suitable for hamburger", "onion", and "chop finely into 2 mm square or so" by interposing connectives "to" and "by" therebetween to complete an advice sentence of "to get the eating texture suitable for hamburger by Chopping onion finely onion into 2 mm square or so."

Subsequently, the advice sentence creation processing unit 106 refers to the basic block table 301 and determines whether or not the current cooking procedure ID is the final cooking procedure ID (step S17). When the current cooking procedure ID is not the final cooking procedure ID (NO in step S17), the advice sentence creation processing unit 106 increases one more cooking procedure ID (step S18). Then, the process returns to the process to acquire a basic block corresponding to the cooking procedure ID in step S13, and the subsequent processes are repeated. Contrarily, when the current cooking procedure ID is determined as the final cooking procedure ID (YES in step S17), the advice sentence creation processing unit 106 ends the advice sentence creating process and the process proceeds to step S10.

In the first embodiment, the recipe information and the personality information are input by the user; however, a list of the information may be previously output to allow the user to select the recipe information and the personality information therefrom. The recipe information, the personality information, and the created advice sentence may be output on the display in the form of a text or via voice. When the advice sentence is output via voice, voices corresponding to subjects, connectives, and basic blocks are previously stored; and an advice sentence (via voice) is created by combining the above. The advice sentence may be output together with a still image or an animation image. In this case, the advice apparatus 1 may store the cooking procedure IDs and the still images or the animation image corresponding to the cooking procedures being previously associated with each other so that, when an advice sentence is output, the still image or the animation image corresponding to the cooking procedure ID may be read out and output simultaneously with the output of the advice sentence.

Further, the previously input or selected personality information of the user may be stored. In this case, the personality information may be acquired in the following manner. That is, the user ID and the personality information are previously stored being associated with each other; and when the user ID is input, the personality information corresponding to the received user ID can be read out.

The first embodiment describes a technique in which a fixed mapping between the personality ID and the persuasion item is used. However, it may be configured such that an evaluation with respect to the present advice is input by the user, and based on the evaluation of the user, the mapping table may be improved. Also, it may be configured such that desired information among the motion, cause, and result may be input previously by the user, and the closest sentence pattern is selected to generate advice. The sentence patterns, connectives, and subjects used for creating advice sentences may be used in a combination other than the exemplified combinations.

By obtaining evaluation with respect to the provided advice and information desired by the user, it is possible to determine whether the persuasion items, the effectiveness of which is not determined yet, are used or not in the mapping table representing the effectiveness of the persuasion items with respect to the personality. Therefore, even with respect to identical personalities, persuasion items to be used can be increased for the respective users.

The advice apparatus according to the embodiment can be realized with only the advice generation processing unit 104, which includes the sentence element determination processing unit 105 and the advice sentence creation processing unit 106, and the advice information database 102. In this case, in the advice apparatus, the advice information database 102 holds a table data having a configuration as illustrated in Figs. 5 to 9. The process performed by the advice apparatus is the advice sentence element determination process in step S8 and the advice sentence creation process in step S9 of Fig. 10.

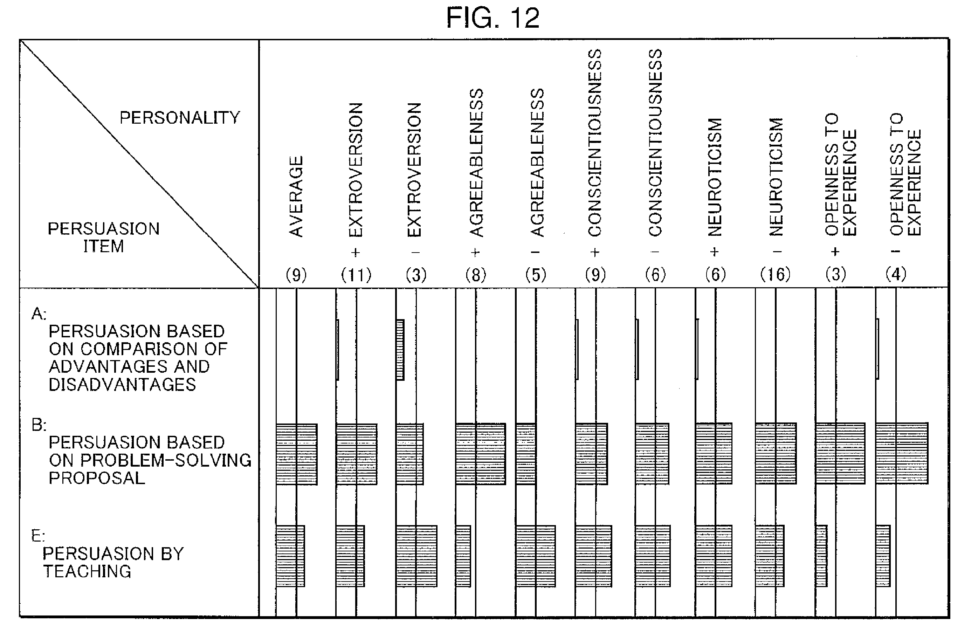

Subsequently, the relevancy between personality of user and advice sentence with respect to a persuasion item will be described. The inventors carried out an experiment to verify the relevancy between personality of user and advice sentence with respect to a persuasion item. Fig. 12 illustrates an experimental result with respect to the preference of users with respective personalities to the advice sentences of the respective persuasion items.

In this experiment, 80 test subjects were sorted into eleven personality patterns. The test subjects were selected, with respect to cooking, from women in their twenties to seventies. As for the sorting method of the personalities in the experiment, different from the above-described first embodiment, the personalities were sorted into 11 patterns; i.e., one-point code (10 patterns) represented by a single factor (high/low) only, and an average personality (1 pattern) which has no remarkable tendency with respect to any factor. In Fig. 12, each number in parentheses given to each personality represents the sorted numbers.

The test subjects were provided with advice sentences corresponding to each of the persuasion items A, B, and E, i.e., "persuasion based on comparison of advantages and disadvantages", "persuasion based on problem-solving proposal", and "persuasion by teaching". In the experiment, advice sentences were provided with respect to menus sorted into two categories. Also, in the experiment, in the five categories of persuasion items A to E, only three categories of the persuasion items A, B, and E were used as the objects. Since the "authority" and "objective standard" of the persuasion items C and D may differ depending on the test subject, it is difficult to select proper nouns as the subject. Therefore, the persuasion items C and D were excluded from the objects of the experiment. The test subjects were requested to select the most preferable advice sentence in the advice sentences corresponding to the respective persuasion items.

Fig. 12 illustrates the experimental result. The histogram represents the number of answers of relevant persuasion items selected by the test subjects. Fig. 12 demonstrates that, comparing the persuasion item B with the persuasion item A, the persuasion item B is preferred to the persuasion item A. The persuasion item A is an advice sentence of a negative expression, while the persuasion item B is an advice sentence of positive expression. That is, the test subjects showed a tendency that, in all of the personalities, advice sentences of positive expression were preferred to advice sentences of negative expression.

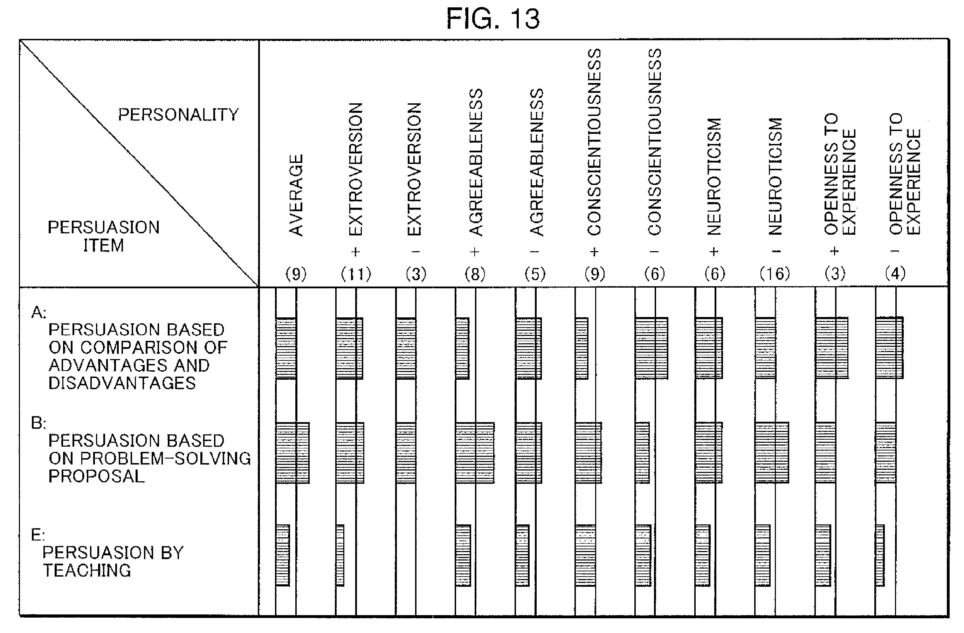

In the experiment illustrated in Fig. 12, under an ordinary situation, cooking advice was given to the test subjects. However, under actual situations, positive advice only is not always preferred. For example, under an emergent situation, negative advice is indispensable to prevent a mistake and/or danger. Fig. 13 illustrates an experimental result with respect to the preference of users with respective personalities to the advice sentences of the respective persuasion items under an emergent situation. The emergent situation includes here cases that a pan is boiling over or scorching.

Fig. 13 demonstrates that, under an emergent situation, the persuasion item A of negative advice is preferred to the persuasion item B of positive advice. The reason of this is that, since the persuasion item A of negative advice is shorter than the persuasion item B of positive advice, the test subjects can understand the present situation more swiftly. The persuasion item E was determined inappropriate to the emergent situation because the advice sentence was longer than the other persuasion items.

As described above, in the mapping table, not only can the persuasion items be associated with the users' personalities but also the persuasion items can be associated with the users' situations.

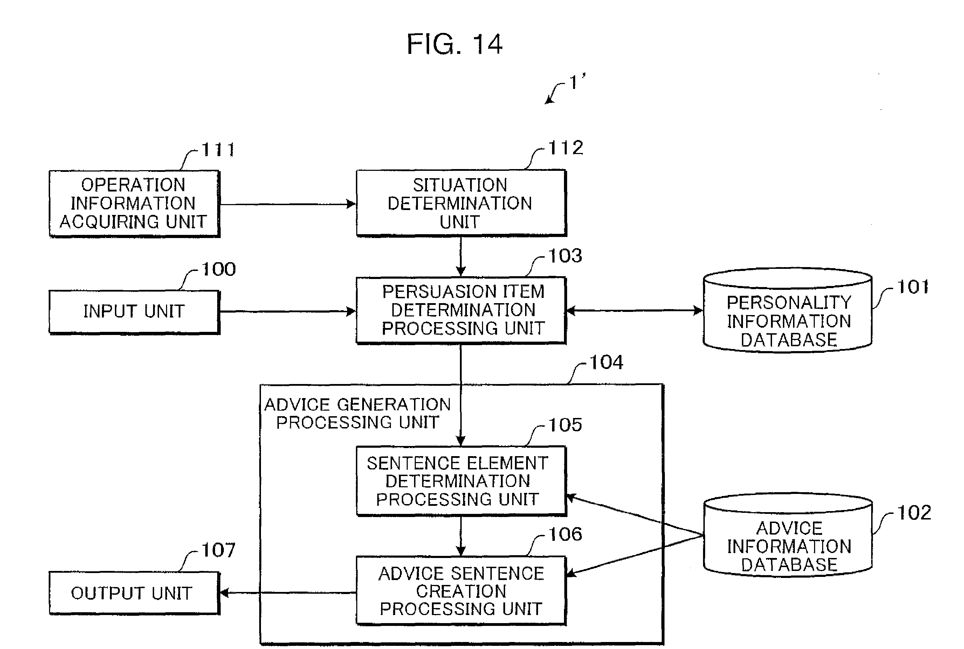

A description will be given about a modification of the first embodiment below. In the modification of the first embodiment, persuasion items are determined in accordance with the situation of a user. Fig. 14 is a block diagram illustrating the configuration of an advice apparatus according to the modification of the first embodiment.

An advice apparatus 1' illustrated in Fig. 14 includes an input unit 100, a personality information database 101, an advice information database 102, a persuasion item determination processing unit 103, an advice generation processing unit 104, an output unit 107, a operation information acquiring unit 111, and a situation determination unit 112. In the modification, the configurations identical to those of the advice apparatus 1 illustrated in Fig. 1 will be given the identical reference numerals and thus a description thereof will be omitted here.

The operation information acquiring unit 111 acquires a piece of operation information of an appliance, such as an IH cooking heater, which a user operates during a cooking operation. For example, the operation information acquiring unit 111 may include a vibration sensor and/or a temperature sensor. The vibration sensor may detect vibrations of a cookware; and the temperature sensor may detect temperature of the cookware.

The situation determination unit 112 determines whether or not the current situation of the user is a situation requiring an emergency action based on the operation information acquired by the operation information acquiring unit 111. The situation determination unit 112 determines whether or not a heated object is boiling in the cookware based on the waveform of vibrations acquired by the operation information acquiring unit 111. When the heated object is boiling in the cookware, the situation determination unit 112 determines it is a situation requiring an emergency action. Also, the situation determination unit 112 determines whether or not the heated object is overcooked in the cookware based on the temperature acquired by the operation information acquiring unit 111. When the heated object is overcooked in the cookware, the situation determination unit 112 determines it is a situation requiring an emergency action.

When the situation determination unit 112 determines it is a situation requiring an emergency action, the persuasion item determination processing unit 103 determines a persuasion item A that persuades the user based on the comparison of the advantages and disadvantages.

In the modification, the operation information acquiring unit 111 is an example of an information acquiring unit, while the situation determination unit 112 is an example of a situation determination unit.

As described above, since the persuasion item A persuades the user by presenting a comparison of advantages and disadvantages, a negative expression is employed. However, in an emergent situation, such negative advice is the most effective. Therefore, under an emergent situation, the persuasion item A is forcibly determined, and thus appropriate advice can be provided corresponding not only to the personality of the user but also to the situation of the user.

In the modification, operation information of appliance is acquired, and it is determined whether or not the current situation of user is a situation requiring an emergency action based on the acquired operation information. The invention is not particularly limited to the above. By acquiring at least a piece of image information of the operating user, voice information generated during operation, and operation information of the appliance operated by the user during the operation, and based on at least one of the pieces of acquired image information, voice information and operation information, the current situation of the user may be determined whether or not it is a situation requiring an emergency action.

### (Second Embodiment)

Subsequently, an advice apparatus according to a second embodiment of the invention will be described. In the first embodiment, an advice sentence is determined based on a piece of personality information input by a user. However, in the second embodiment, an advice sentence is created by temporarily setting a persuasion item, and a persuasion item is reset in accordance with a reaction of a user to the advice sentence, thereby the user's operation of inputting a piece of personality information is eliminated.

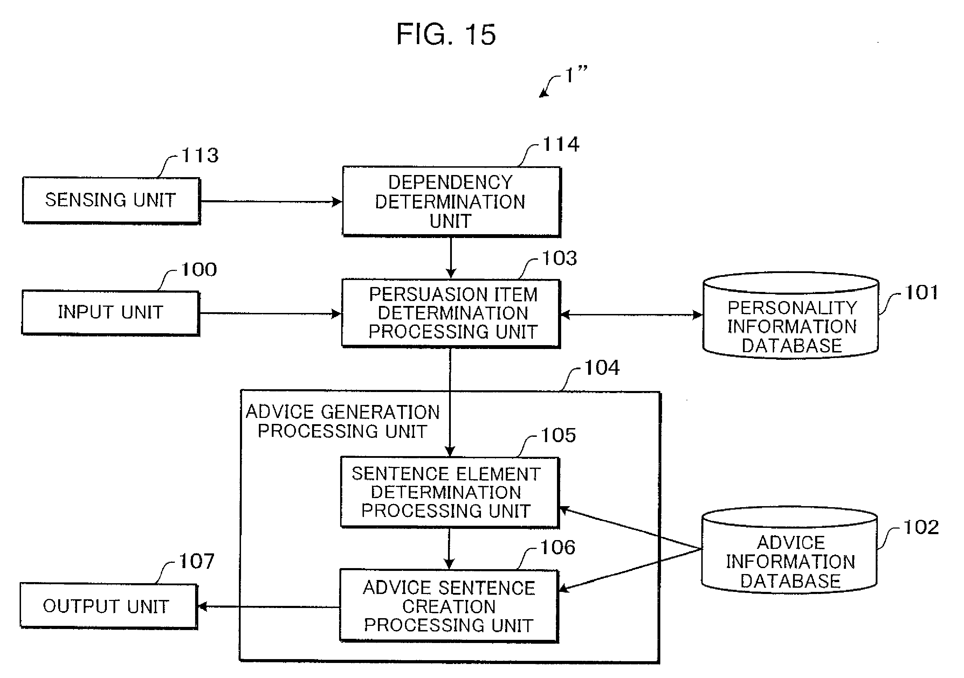

Fig. 15 is a block diagram illustrating the configuration the advice apparatus according to the second embodiment. An advice apparatus 1" illustrated in Fig. 15 includes an input unit 100, a personality information database 101, an advice information database 102, a persuasion item determination processing unit 103, an advice generation processing unit 104, an output unit 107, a sensing unit 113, and a dependency determination unit 114. In the second embodiment, the configurations identical to those of the advice apparatus 1 illustrated in Fig. 1 are given the identical reference numerals and thus a description thereof is omitted here.

When personality information is not input by the user, the persuasion item determination processing unit 103 sets a persuasion item previously determined as an initial value. The sensing unit 113 includes a camera, a microphone, various sensors, and the like to observe a reaction of the user to the advice sentence output by the output unit 107. The dependency determination unit 114 recognizes the reaction of the user observed by the sensing unit 113 and determines whether or not the user carries out the operation depending on the advice sentence.

When the dependency determination unit 114 determines that the user depends on the contents of the advice, the persuasion item determination processing unit 103 acquires a personality ID corresponding to the preset persuasion item. The personality ID acquired here is a representative value previously associated with the respective persuasion items. When the dependency determination unit 114 determines that the user does not depend on the contents of the advice, the persuasion item determination processing unit 103 sets another persuasion item.

In the second embodiment, the sensing unit 113 is an example of an observation unit; and the dependency determination unit 114 is an example of a determination unit.

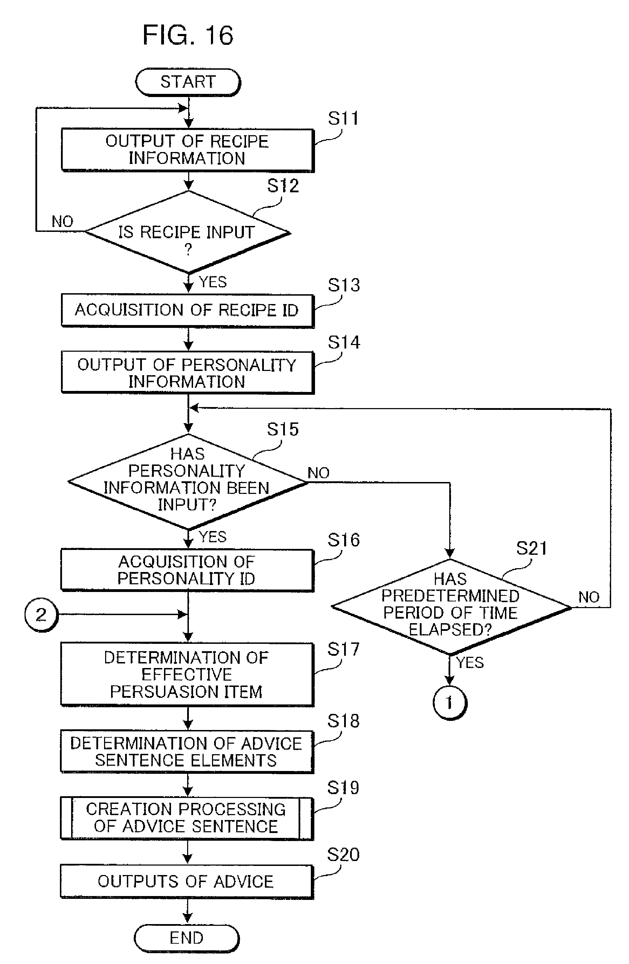

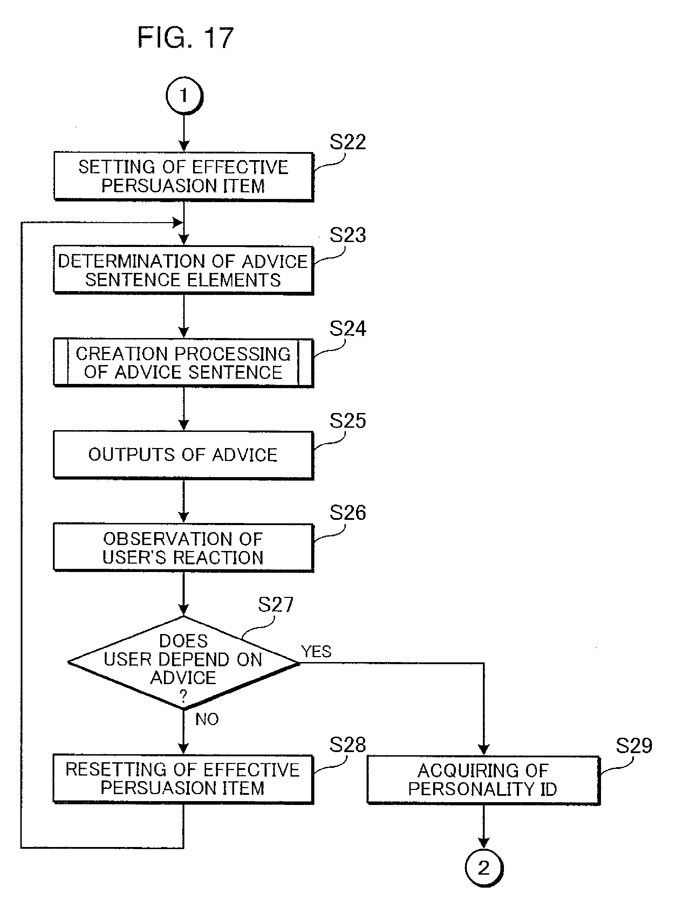

The operation of the advice apparatus 1" according to the second embodiment will be described below. Fig. 16 and Fig. 17 are flowcharts illustrating the operation of the advice apparatus according to the second embodiment. Since the processes in steps S11 through S14 and S16 through S20 in Fig. 16 are identical to the processes in steps S1 through S4 and S6 through S10 in Fig. 10, a description thereof will be omitted here.

In step S15, the input unit 100 determines whether or not the user has input a piece of personality information. When the user has input the personality information (YES in step S15), the process proceeds to step S16. Contrarily, when the user has not input personality information (NO in step S15), the input unit 100 determines whether or not a predetermined period of time has elapsed (step S21). When it is determined that the predetermined period of time has not elapsed (NO in step S21), the process returns to step S15. Contrarily, when it is determined that the predetermined period of time has elapsed (YES in step S21), the process proceeds to step S22 of Fig. 17.

In step S22, the persuasion item determination processing unit 103 sets a persuasion item previously determined as an initial value. As the experimental result in Fig. 12 illustrates, a persuasion item B is preferred by almost all test subjects of all personalities. Accordingly, the persuasion item determination processing unit 103 sets the persuasion item B as an initial value.

The processes in steps S23 through S25 are identical to the processes in steps S8 through S10 in Fig. 10, and thus a description thereof will be omitted here.

Subsequently, in step S26, the sensing unit 113 observes the reaction of the user to the advice output by the output unit 107. The sensing unit 113 observes at least one of the appearance, behavior, and speech of the user. Particularly, when observing the user's appearance and behavior, the sensing unit 113 acquires a piece of image information of the user. When observing the speech of the user, particularly, the sensing unit 113 acquires a piece of recorded voice information of the user. Also, the sensing unit 113 may observe a piece of operation information of an appliance operated by the user during the operation. When observing the operation information, particularly, the sensing unit 113 acquires information as to ON/OFF of the appliance, the temperature setting of the appliance, the temperature of cookingware placed on the appliance, vibrations of the cookware, and the like.

Subsequently, the dependency determination unit 114 determines whether or not the user depends on the advice (step S27). Particularly, the dependency determination unit 114 analyzes the image acquired by the sensing unit 113 and determines that, when the user nods, provides feedback to an advice, or is surprised at an advice, the user depends on the advice. Also, analyzing the voice information acquired by the sensing unit 113, and when the user positively speaks, the dependency determination unit 114 may determine that the user depends on the advice. Contrarily, analyzing the image acquired by the sensing unit 113, the dependency determination unit 114 determines that, when the user puts his head on one side, shakes his/her head, or shows no expression, the user does not depend on the advice. Further, analyzing the voice information acquired by the sensing unit 113, the dependency determination unit 114 may determine that, when the user makes a negative speech, the user does not depend on the advice.

In the case that the advice is output using animation, analyzing the image acquired by the sensing unit 113, the dependency determination unit 114 may determine whether or not the user continuously watches the display. When the user watches the display continuously, the dependency determination unit 114 determines that the user depends on the advice. Contrarily, when the user does not watch the display continuously, the dependency determination unit 114 determines that the user does not depend on the advice.

Furthermore, in the case the advice is output using a still image and characters, analyzing the image acquired by the sensing unit 113, the dependency determination unit 114 may determine whether or not the user watches the display even at a glance. When the user watches the display even at a glance, the dependency determination unit 114 determines that the user depends on the advice. Contrarily, when the user does not watch the display at all, the dependency determination unit 114 determines that the user does not depend on the advice.

Still further, the sensing unit 113 may monitor the cooking operation of the user. When the user reflects the advice in the cooking operation, the dependency determination unit 114 may determine that the user depends on the advice. When the user does not reflect the advice to the cooking operation, the dependency determination unit 114 may determine that the user does not depend on the advice. For example, the sensing unit 113 takes a photograph of what the user is handling with a camera and recognizes the foodstuff cooked by the user, and monitors whether or not the user uses the foodstuff in accordance with advice.

Still furthermore, analyzing the operation information acquired by the sensing unit 113, the dependency determination unit 114 may determine whether or not the appliance is operated in accordance with the advice. When it is determined that the user operates the appliance in accordance with the advice, the dependency determination unit 114 determines that the user depends on the advice. Contrarily, when it is determined that the user does not operate the appliance in accordance with the advice, the dependency determination unit 114 determines that the user does not depend on the advice.

When it is determined that the user does not depend on the advice (NO in step S27), the persuasion item determination processing unit 103 sets another persuasion item (step S28), and the process returns to the process in step S23. Contrarily when it is determined that the user depends on the advice (YES in step S27), the persuasion item determination processing unit 103 acquires a personality ID previously associated with the currently set persuasion item (step S29), and the process returns to step S17 of Fig. 16. The respective persuasion items are previously associated with the personality IDs as representative values.

The advice apparatus according to the first and the second embodiments are a cooking advice apparatus for assisting cooking of a user. However the invention is not particularly limited to the above. The advice apparatus may be a car navigation apparatus that guides a vehicle to a destination by means of a map and/or voice.

The advice apparatus 1, 1' and 1" may be a general-purpose information-processing unit as hardware including a central processing unit (CPU), a nonvolatile memory or a storage unit storing a program and/or permanent data, a fast accessible volatile memory for temporarily storing data, and an output/input device. Also, an advice program for causing the hardware resources to cooperatively operate may be previously stored in the nonvolatile memory or the storage unit as software. In this case, the advice program may be delivered via a computer readable recording medium such as a magnetic disk or optical disk or communication line such as the Internet. And writing functions may be previously provided to the nonvolatile memory or storage unit to add a new function or update the function.

The above-described particular embodiments include the inventions having the following configurations.

An advice apparatus according to an aspect of the invention includes: a personality information storage unit that stores a piece of effective persuasion information for each piece of previously sorted personality information; an advice information storage unit that stores a plurality of sentence elements for composing advice for assisting an operation of a user and pieces of composition information for the sentence elements corresponding to the pieces of persuasion information; an acquiring unit that acquires a piece of personality information of the user; a persuasion information decision unit that refers to the personality information storage unit and determines a piece of effective persuasion information for the personality information acquired by the acquiring unit; an advice information generating unit that refers to the advice information storage unit and generates the advice by connecting the plurality of sentence elements based on the composition information corresponding to the persuasion information decided by the persuasion information decision unit; and an output unit that outputs the advice generated by the advice information generating unit.

An advice method according to another aspect of the invention includes: an acquisition step for acquiring a piece of previously sorted personality information of a user; a persuasion information determination step for determining a piece of effective persuasion information for the personality information acquired by the acquiring step by referring to a personality information storage unit storing a piece of effective persuasion information for each of the pieces of the personality information; an advice generation step for generating advice by connecting the plurality of sentence elements based on the pieces of the composition information corresponding to the persuasion information determined by the persuasion information determination step by referring to an advice information storage unit storing the plurality of sentence elements for composing the advice for assisting operation of the user and pieces of composition information of the sentence elements corresponding to the persuasion information; and output step for outputting the advice generated in the advice generating step.

An advice program according to another aspect of the invention causes a computer to function as: a personality information storage unit that stores a piece of effective persuasion information effective for each piece of previously sorted personality information; an advice information storage unit that stores a plurality of sentence elements for composing advice for assisting an operation of a user and pieces of composition information for the sentence elements corresponding to the pieces of persuasion information; an acquiring unit that acquires a piece of personality information of the user; a persuasion information decision unit that refers to the personality information storage unit and determines a piece of effective persuasion information for the personality information acquired by the acquiring unit; an advice information generating unit that refers to the advice information storage unit and generates the advice by connecting the plural pieces of sentence elements based on the composition information corresponding to the persuasion information decided by the persuasion information decision unit; and an output unit that outputs the advice generated by the advice information generating unit.

A computer readable recording medium storing the advice program according to another aspect of the invention stores an advice program for causing a computer to function as: a personality information storage unit that stores a piece of effective persuasion information effective for each piece of previously sorted personality information; an advice information storage unit that stores a plurality of sentence elements for composing advice for assisting an operation of a user and pieces of composition information for the sentence elements corresponding to the pieces of persuasion information; an acquiring unit that acquires a piece of personality information of the user; a persuasion information decision unit that refers to the personality information storage unit and determines a piece of effective persuasion information for the personality information acquired by the acquiring unit; an advice information generating unit that refers to the advice information storage unit and generates the advice by connecting the plural pieces of sentence elements based on the composition information corresponding to the persuasion information decided by the persuasion information decision unit; and an output unit that outputs the advice generated by the advice information generating unit.

According to the above-described configuration, a piece of personality information of a user, which is previously sorted, is acquired first. And then, referring to a personality information storage unit that stores a piece of effective persuasion information for the each piece of the personality information, a piece of persuasion information that is effective to the acquired personality information is determined. And referring to the advice information storage unit that stores a plurality of sentence elements for composing advice for assisting the operation of the user and a plural pieces of composition information of sentence elements corresponding to the pieces of persuasion information, the plurality of sentence elements are connected to generate the advice based on a piece of composition information appropriate to the determined persuasion information, and the generated advice is output.

Therefore, persuasion information which is effective to the personality of the user is determined, and an advice for assisting the operation of the user is generate based on the determined persuasion information, and thereby an appropriate advice corresponding to the personality of the user can be provided.

In the above advice apparatus, it is preferable that the acquiring unit acquires a piece of personality information sorted on the basis of the Big Five factor personality sorting, and the personality information storage unit stores pieces of persuasion information which are effective to the respective pieces of personality information sorted on the basis of the Big Five factor personality sorting.

According to the above configuration, a piece of personality information sorted on the basis of the Big Five factor personality sorting is acquired, and a piece of effective persuasion information for each piece of personality information sorted on the basis of the Big Five factor personality sorting is stored. Therefore, an effective piece of persuasion information can be determined using the Big Five factor personality sorting capable of precisely sorting the personality of the user.

Preferably, the advice apparatus is further provided with an observation unit that observes a reaction of the user to the advice output by the output unit and a determination unit that recognizes the reaction of the user observed by the observation unit and determines whether or not the operation is carried out depending on the advice. Also, preferably, the persuasion information decision unit decides another piece of persuasion information when the determination unit determines that that the operation is carried out without depending on the advice.

According to the above configuration, the reaction of the user to the output advice is observed and the observed reaction of the user is recognized, and it is determined whether or not the user carries out the operation depending on the advice. When it is determined that user carries out the operation without depending on the advice, another persuasion information is determined and advice is generated by connecting a plurality of sentence elements based on a piece of composition information appropriate to the another persuasion information.

Therefore, if it is determined that the operation is carried out without depending on the advice when determining whether or not the user carries out the operation depending on the advice, the arrangement of the sentence elements of the advice is changed on the basis of another piece of persuasion information. Therefore, even when an incorrect piece of personality information is input, correct persuasion information can be selected. Also, even when no piece of personality information is input, a piece of persuasion information appropriate to the user can be selected.

In the invention, it is determined whether or not the user carries out the operation depending on the advice. However, the invention is not limited to the above. The invention may be configured such that the attitude of the user to the advice apparatus such as level of interest or favorability may be determined. In this case, the reaction of the user to the output advice is observed and the observed reaction of the user is recognized, and it may be determined whether or not the user is interested in or has a positive feeling to the advice. When it is determined that user is not interested in or does not have positive feeling to the advice, another persuasion information is determined, and plural sentence elements are connected to generate advice based on another composition information corresponding to this another persuasion information.

In the above-described advice apparatus, it is preferable that the observation unit acquires at least one of image information of the operating user, voice information generated during the operation, and operation information of an appliance operated by the user during the operation.

According to the above configuration, at least one of image information of the operating user, voice information generated during the operation and operation information of an appliance operated by the user during the operation is acquired. Therefore, the reaction of the user to the advice can be recognized based on these pieces of information.

Further, in the above-described advice apparatus, it is preferable that the persuasion information includes at least one of a piece of first persuasion information for persuading the user based on comparison of advantages and disadvantages, a piece of second persuasion information for persuading the user by presenting a problem solving method estimated as the most suitable to the user, a piece of third persuasion information for persuading the user by utilizing authority of an authority figure, a piece of fourth persuasion information for persuading the user by utilizing an objective standard, and a piece of fifth persuasion information for persuading the user by presenting a basis of argument while clarifying the problem.

According to the above configuration, the persuasion information includes at least one of a piece of first persuasion information for persuading the user based on comparison of advantages and disadvantages, a piece of second persuasion information for persuading the user by presenting a problem solving method estimated as the most suitable to the user, a piece of third persuasion information for persuading the user by utilizing authority of an authority figure, a piece of fourth persuasion information for persuading the user by utilizing an objective standard, and a piece of fifth persuasion information for persuading the user by presenting a basis of argument while clarifying the problem. And since a piece of persuasion information the most suitable to the personality of the user among these pieces of the persuasion information is determined, advice appropriate to the user can be provided.

Furthermore, the above-described advice apparatus is preferably provided with an information acquiring unit for acquiring at least one of image information of the user in operation, voice information generated during the operation, and operation information of an appliance operated by the user during the operation, and a situation determination unit for determining whether or not the current situation of the user requires an emergency action based on at least one of the image information, the voice information, and the operation information acquired by the operation information acquiring unit. And it is further preferable that, when the situation determination unit decides that it is a situation requiring an emergency action, the persuasion information decision unit determines the piece of persuasion information for persuading the user by presenting comparison of advantages and disadvantages in the previously sorted pieces of persuasion information.

According to the above configuration, at least one of the image information of the user in operation, voice information generated during the operation, and operation information of an appliance operated by the user during the operation is acquired, and it is determined whether or not the current situation of the user is a situation requiring an emergency action based on at least one of the acquired image information, the voice information, and the operation information. When it is determined as a situation requiring an emergency action, the persuasion information for persuading the user by comparison of advantages and disadvantages in the previously sorted pieces of persuasion information is determined. Although the persuasion information for persuading the user by presenting comparison of the advantages and disadvantages includes a negative expression, in an emergent situation, advice of such a negative expression is the most effective. Therefore, in an emergent situation, since the persuasion information for persuading the user by presenting comparison of advantages and disadvantages is forcibly determined, appropriate advice can be provided not only suitable to the personality of the user but also suitable to the situation of the user.

In the above-described advice apparatus, the advice information storage unit preferably stores a plurality of sentence elements for creating advice for assisting cooking of the user. According to the configuration, since the advice information storage unit stores a plurality of sentence elements for creating advice for assisting the cooking of the user, advice for assisting the cooking can be provided to the user.

In the above-described advice apparatus, it is preferable that the advice information storage unit stores a plurality of sentence elements for creating advice for assisting the user to drive a vehicle. According to the above configuration, since the advice information storage unit stores a plurality of sentence elements for creating advice for assisting the user to drive a vehicle, advice for assisting the driving operation of the vehicle can be provided to the user.

### INDUSTRIAL APPLICABILITY

The advice apparatus, the advice method, the advice program and the computer readable recording medium storing the advice program according to the invention are useful as an advice apparatus, an advice method, an advice program and a computer readable recording medium storing the advice program capable of providing advice appropriate to the personality of a user and presenting advice for assisting the user's operation by means of text, voice and the like.

## Claims

1. An advice apparatus, comprising:
a personality information storage unit that stores a piece of effective persuasion information for each piece of previously sorted personality information;
an advice information storage unit that stores a plurality of sentence elements for creating advice for assisting an operation of a user and pieces of composition information for the sentence elements corresponding to the pieces of persuasion information;
an acquiring unit that acquires a piece of personality information of the user;
a persuasion information decision unit that refers to the personality information storage unit and determines a piece of effective persuasion information for the personality information acquired by the acquiring unit;
an advice information generating unit that refers to the advice information storage unit and generates the advice by connecting the plural pieces of sentence elements based on the composition information corresponding to the persuasion information decided by the persuasion information decision unit; and
an output unit that outputs the advice generated by the advice information generating unit.

2. The advice apparatus according to claim 1, wherein the acquiring unit acquires a piece of personality information sorted on the basis of a Big Five factor personality sorting.

3. The advice apparatus according to claim 1 or 2, further comprising:
an observation unit that observes a reaction of the user to the advice output by the output unit; and
a determination unit that recognizes the reaction of user observed by the observation unit and determines whether or not the operation is carried out depending on the advice,
wherein when the determination unit determines that the operation is carried out without depending on the advice, the persuasion information decision unit decides another persuasion information.

4. The advice apparatus according to claim 3, wherein the observation unit acquires at least one piece of image information of the user in operation, voice information generated during the operation, and operation information of an appliance operated by the user during the operation.

5. The advice apparatus according to any one of claims 1 to 4, wherein the persuasion information includes at least one of a piece of first persuasion information for persuading the user by presenting a comparison of advantages and disadvantages, a piece of second persuasion information for persuading the user by presenting a problem solving method estimated as the most appropriate solution for the user, a piece of third persuasion information for persuading the user by utilizing an authority of an authority figure, a piece of fourth persuasion information for persuading the user by utilizing an objective standard, and a piece of fifth persuasion information for persuading the user by presenting a basis of persuasion while clarifying a point of a problem.

6. The advice apparatus according to any one of claims 1 to 4, further comprising:
an information acquiring unit that acquires at least one of a piece of image information of the user in operation, a piece of voice information generated during the operation and a piece of operation information of an appliance operated by the user during the operation; and
a situation determination unit that determines whether or not the current situation of the user is a situation requiring an emergency action based on at least one of the image information, the voice information, and the operation information acquired by the operation information acquiring unit,
wherein the persuasion information decision unit decides, when the situation determination section determines as a situation requiring an emergency action, a piece of persuasion information for persuading the user by presenting a comparison of advantages and disadvantages in the pieces of previously sorted persuasion information.

7. The advice apparatus according to any one of claims 1 to 6, wherein the advice information storage unit stores a plurality of sentence elements for creating advice for assisting cooking of the user.

8. The advice apparatus according to any one of claims 1 to 6, wherein the advice information storage unit stores a plurality of sentence elements for creating advice for assisting the user to drive a vehicle.

9. An advice method, comprising the steps of:
acquiring a piece of previously sorted personality information of a user;
determining a piece of effective persuasion information for the personality information acquired by the acquiring step by referring to a personality information storage unit storing a piece of effective persuasion information for each piece of the personality information;
generating an advice by connecting the plurality of sentence elements based on the pieces of the composition information corresponding to the persuasion information determined by the persuasion information determination step by referring to an advice information storage unit storing the plurality of sentence elements for creating advice for assisting operation of the user and pieces of composition information of the sentence elements corresponding to the persuasion information; and
outputting the advice generated in the advice generating step.

10. An advice program for causing a computer to function as:
a personality information storage unit that stores a piece of effective persuasion information for each of piece of previously sorted personality information;
an advice information storage unit that stores a plurality of sentence elements for creating advice for assisting an operation of a user and pieces of composition information for the sentence elements corresponding to the pieces of persuasion information;
an acquiring unit that acquires a piece of personality information of the user;
a persuasion information decision unit that refers to the personality information storage unit and thereby determines a piece of effective persuasion information for the personality information acquired by the acquiring unit;
an advice information generating unit that refers to the advice information storage unit and generates the advice by connecting the plural pieces of sentence elements based on the composition information corresponding to the persuasion information decided by the persuasion information decision unit; and
an output unit that outputs the advice generated by the advice information generating unit.

11. A computer readable recording medium storing an advice program for causing a computer to function as:
a personality information storage unit that stores a piece of effective persuasion information for each piece of previously sorted personality information;
an advice information storage unit that stores a plurality of sentence elements for creating advice for assisting an operation of a user and pieces of composition information for the sentence elements corresponding to the pieces of persuasion information;
an acquiring unit that acquires a piece of personality information of the user;
a persuasion information decision unit that refers to the personality information storage unit and thereby determines a piece of effective persuasion information for the personality information acquired by the acquiring unit;
an advice information generating unit that refers to the advice information storage unit and generates the advice by connecting the plural pieces of sentence elements based on the composition information corresponding to the persuasion information decided by the persuasion information decision unit; and
an output unit that outputs the advice generated by the advice information generating unit.
